# EUROPÄISCHE PATENTSCHRIFT

(11) **EP 1 209 353 B1**
(45) Veröffentlichungstag und Bekanntmachung des Hinweises auf die Patenterteilung: **17.03.2004**
(21) Anmeldenummer: 01127696.1
(22) Anmeldetag: 21.11.2001
(51) Int. Cl.: F02M 63/00, F02M 61/08, F02M 61/20

(54) **Brennstoffeinspritzventil**
Fuel injection valve
Soupape d'injection de carburant

(30) Priorität: 24.11.2000 DE 10058373
(43) Veröffentlichungstag der Anmeldung: 29.05.2002
(73) Patentinhaber: ROBERT BOSCH GMBH, 70442 Stuttgart (DE)
(72) Erfinder: Dantes, Guenter, 71735 Eberdingen (DE); Nowak, Detlef, 74199 Untergruppenbach (DE); Klaski, Michael, 71723 Grossbottwar (DE)
(74) Vertreter: Körfer, Thomas, Dipl.-Phys.

(56) Entgegenhaltungen:
- EP-A- 0 463 730
- US-A- 1 664 612
- US-A- 3 705 692
- US-A- 4 763 841

## Beschreibung

### Stand der Technik

Die Erfindung geht aus von einem Brennstoffeinspritzventil nach der Gattung des Anspruchs 1.

Beispielsweise ist aus der DE 196 26 576 A1 ein elektromagnetisch betätigbares Brennstoffeinspritzventil bekannt, bei welchem zur elektromagnetischen Betätigung ein Anker mit einer elektrisch erregbaren Magnetspule zusammenwirkt und der Hub des Ankers über eine Ventilnadel auf einen Ventilschließkörper übertragen wird. Der Ventilschließkörper wirkt mit einer Ventilsitzfläche zu einem Dichtsitz zusammen. Im Anker sind mehrere Brennstoffkanäle vorgesehen. Die Rückstellung des Ankers erfolgt mit einer Rückstellfeder.

Aus der DE 197 36 682 A1 ist ein Brennstoffeinspritzventil zum direkten Einspritzen von Brennstoff in den Brennraum einer gemischverdichtenden, fremdgezündeten Brennkraftmaschine bekannt, welches am stromabwärtigen Ende des Brennstoffeinspritzventils einen Führungs- und Sitzbereich aufweist, der von drei scheibenförmigen Elementen gebildet wird. Dabei ist ein Drallelement zwischen einem Führungselement und einem Ventilsitzelement eingebettet. Das Führungselement dient der Führung einer es durchragenden, axial beweglichen Ventilnadel, während ein Ventilschließabschnitt der Ventilnadel mit einer Ventilsitzfläche des Ventilsitzelements zusammenwirkt. Das Drallelement weist einen inneren Öffnungsbereich mit mehreren Drallkanälen auf, die nicht mit dem äußeren Umfang des Drallelements in Verbindung stehen. Der gesamte Öffnungsbereich erstreckt sich vollständig über die axiale Dicke des Drallelements.

Weiterhin ist aus der US 1,664,612 ein elektromagnetisch betätigbares Zumeßventil bekannt. Das Zumeßventil umfaßt ein Gehäusebauteil und einen eisenumhüllten Elektromagnet, der mit dem Gehäusebauteil unter Bildung eines Flüssigkeit enthaltenden Gehäuses zusammenwirkt. Es umfaßt weiterhin eine zentrale Ventilnadel und ein äußere Ventilnadel, welche sich nach innen in unmittelbare Nähe der zentralen Ventilnadel erstreckt. Weiterhin ist ein Steuerventil für die Ventilnadel mit einer Grundstellung in geschlossener Position vorgesehen, welches in dem Gehäuse angeordnet ist, wobei ein Anker vorgesehen ist, der mit den Ventilnadeln zusammenwirkt und auf einer kurzen Distanz denjenigen Teil der äußeren Ventilnadel überdeckt, welcher sich in unmittelbarer Nähe der zentralen Ventilnadel befindet.

Nachteilig an den aus den oben genannten Druckschriften bekannten Brennstoffeinspritzventilen ist insbesondere die Verkokungsneigung durch ein großes Totvolumen, da es sich in beiden Fällen um nach innen öffnende Brennstoffeinspritzventile handelt. Des weiteren ist bei nach innen öffnenden Brennstoffeinspritzventilen die Gefahr von kurzzeitigen, ungewollten Öffnungsvorgängen sehr hoch, was beispielsweise zu einem erhöhten Ausstoß von Kohlenwasserstoffen und damit zu Emissionsspitzen führt.

### Vorteile der Erfindung

Das erfindungsgemäße Brennstoffeinspritzventil mit den Merkmalen des Anspruchs 1 hat demgegenüber den Vorteil, daß ein nach innen öffnendes Brennstoffeinspritzventil mit einem nachgeschalteten Aufsatz mit einem nach außen öffnenden Dichtsitz kombiniert ist.

Dadurch können die Vorteile eines nach außen öffnenden Brennstoffeinspritzventils mit dem einfachen Aufbau eines nach innen öffnenden Brennstoffeinspritzventils verbunden werden.

Durch die in den abhängigen Ansprüchen aufgeführten Maßnahmen sind vorteilhafte Weiterentwicklungen und Verbesserungen des im Anspruch 1 angegebenen Brennstoffeinspritzventils möglich.

Von Vorteil ist auch, daß der Aufsatz einfach herstellbar und mittels Löten, Schweißen oder Kleben mit dem Ventilsitzkörper oder dem Düsenkörper des Brennstoffeinspritzventils verbindbar ist.

Von Vorteil ist außerdem, daß ein Öffnungswinkel der kegelförmigen Gemischwolke durch den Neigungswinkel des an seinem abströmseitigen Ende kegelförmig ausgebildeten Zapfens einstellbar ist.

Insbesondere ist die Ausbildung von zumindest einem Strömungskanal, der die erste Ausnehmung über die Durchströmöffnungen in der Membran mit der zweiten Ausnehmung verbindet, von Vorteil, da auf einfache Weise eine Verdrallung des die nachgeschaltete Ventilgruppe durchströmenden Brennstoffs möglich ist.

### Zeichnung

Ein Ausführungsbeispiel der Erfindung ist in der Zeichnung vereinfacht dargestellt und in der nachfolgenden Beschreibung näher erläutert. Es zeigen:
- Fig. 1: einen axialen Schnitt durch ein Ausführungsbeispiel eines erfindungsgemäßen Brennstoffeinspritzventils,
- Fig. 2A: eine vergrößerte Ansicht des in Fig. 1 dargestellten Ausführungsbeispiels eines erfindungsgemäßen Brennstoffeinspritzventils in geschlossenem Zustand im Bereich II in Fig. 1, und
- Fig. 2B: eine vergrößerte Ansicht des in Fig. 1 dargestellten Ausführungsbeispiels eines erfindungsgemäßen Brennstoffeinspritzventils in geöffnetem Zustand im Bereich II in Fig. 1,

### Beschreibung des Ausführungsbeispiels

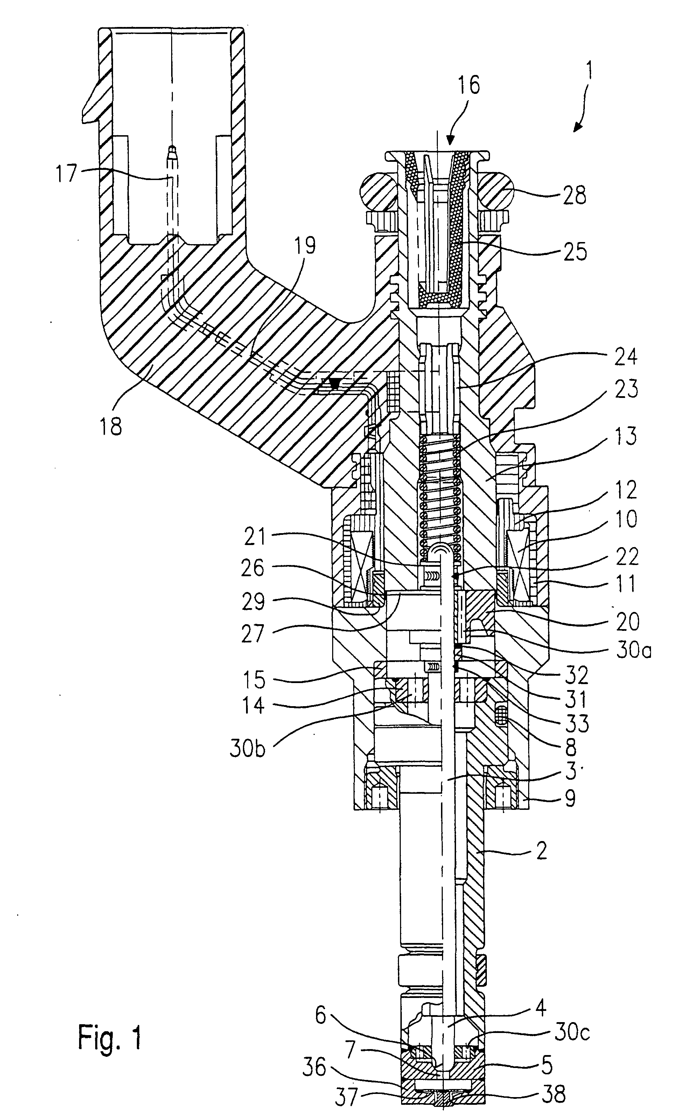

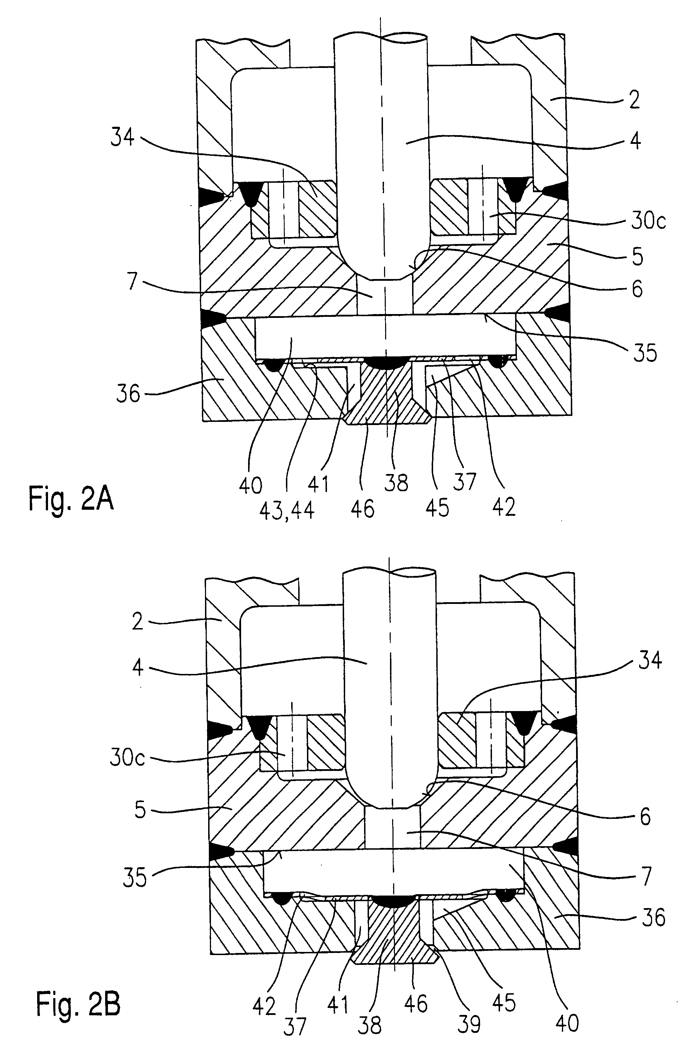

Bevor anhand der Figuren 2A und 2B ein erfindungsgemäßes Brennstoffeinspritzventil 1 in zwei Schaltzuständen näher beschrieben wird, soll zum besseren Verständnis der Erfindung zunächst anhand von Fig. 1 das erfindungsgemäße Brennstoffeinspritzventil 1 in einer Gesamtdarstellung bezüglich seiner wesentlichen Bauteile kurz erläutert werden.

Das Brennstoffeinspritzventil 1 ist in der Form eines Brennstoffeinspritzventils für Brennstoffeinspritzanlagen von gemischverdichtenden, fremdgezündeten Brennkraftmaschinen ausgeführt. Das Brennstoffeinspritzventil 1 eignet sich insbesondere zum direkten Einspritzen von Brennstoff in einen nicht dargestellten Brennraum einer Brennkraftmaschine.

Das Brennstoffeinspritzventil 1 umfaßt einen Düsenkörper 2, in welchem eine Ventilnadel 3 angeordnet ist. Die Ventilnadel 3 steht mit einem Ventilschließkörper 4 in Wirkverbindung, der mit einer auf einem Ventilsitzkörper 5 angeordneten Ventilsitzfläche 6 zu einem ersten Dichtsitz zusammenwirkt. Bei dem Brennstoffeinspritzventil 1 handelt es sich im Ausführungsbeispiel um ein nach innen öffnendes Brennstoffeinspritzventil 1, welches über eine Abspritzöffnung 7 verfügt. Der Düsenkörper 2 ist durch eine Dichtung 8 gegen den Außenpol 9 einer Magnetspule 10 abgedichtet. Die Magnetspule 10 ist in einem Spulengehäuse 11 gekapselt und auf einen Spulenträger 12 gewickelt, welcher an einem Innenpol 13 der Magnetspule 10 anliegt. Der Innenpol 13 und der Außenpol 9 sind durch einen Spalt 26 voneinander getrennt und stützen sich auf einem Verbindungsbauteil 29 ab. Die Magnetspule 10 wird über eine Leitung 19 von einem über einen elektrischen Steckkontakt 17 zuführbaren elektrischen Strom erregt. Der Steckkontakt 17 ist von einer Kunststoffummantelung 18 umgeben, die am Innenpol 13 angespritzt sein kann.

Die Ventilnadel 3 ist in einer Ventilnadelführung 14 geführt, welche scheibenförmig ausgeführt ist. Zur Hubeinstellung dient eine zugepaarte Einstellscheibe 15. An der anderen Seite der Einstellscheibe 15 befindet sich ein Anker 20. Dieser steht über einen ersten Flansch 21 kraftschlüssig mit der Ventilnadel 3 in Verbindung, welche durch eine Schweißnaht 22 mit dem ersten Flansch 21 verbunden ist. Auf dem ersten Flansch 21 stützt sich eine Rückstellfeder 23 ab, welche in der vorliegenden Bauform des Brennstoffeinspritzventils 1 durch eine Hülse 24 auf Vorspannung gebracht wird.

Ein zweiter Flansch 31, welcher mit der Ventilnadel 3 über eine Schweißnaht 33 verbunden ist, dient als unterer Ankeranschlag. Ein elastischer Zwischenring 32, welcher auf dem zweiten Flansch 31 aufliegt, vermeidet Ankerpreller beim Schließen des Brennstoffeinspritzventils 1.

In der Ventilnadelführung 14, im Anker 20 sowie in einem. Führungselement 34, welches der Führung der Ventilnadel 3 im Sitzbereich dient, verlaufen Brennstoffkanäle 30a bis 30c. Der Brennstoff wird über eine zentrale Brennstoffzufuhr 16 zugeführt und durch ein Filterelement 25 gefiltert. Das Brennstoffeinspritzventil 1 ist durch eine Dichtung 28 gegen eine nicht weiter dargestellte Brennstoffleitung abgedichtet.

An einem abströmseitigen Ende 35 des Ventilsitzkörpers 5 ist ein Aufsatz 36 ausgebildet, der das Brennstoffeinspritzventil 1 abströmseitig abschließt und einen mit einer Membran 37 verbundenen Zapfen 38 aufweist, der hydraulisch durch den Brennstoffdruck zum Abspritzen von Brennstoff betätigbar ist. Der Zapfen 38 bildet mit dem Aufsatz 36 einen zweiten Dichtsitz und damit eine nach außen öffnende nachgeschaltete Ventilgruppe. Eine detaillierte Darstellung des abströmseitigen Teils des erfindungsgemäß ausgestalteten Brennstoffeinspritzventils 1 sowie der Funktionsweise ist den Fig. 2A und 2B zu entnehmen.

Im Ruhezustand des Brennstoffeinspritzventils 1 wird der Anker 20 von der Rückstellfeder 23 entgegen seiner Hubrichtung so beaufschlagt, daß der Ventilschließkörper 4 am Ventilsitz 6 in dichtender Anlage gehalten wird. Bei Erregung der Magnetspule 10 baut diese ein Magnetfeld auf, welches den Anker 20 entgegen der Federkraft der Rückstellfeder 23 in Hubrichtung bewegt, wobei der Hub durch einen in der Ruhestellung zwischen dem Innenpol 12 und dem Anker 20 befindlichen Arbeitsspalt 27 vorgegeben ist. Der Anker 20 nimmt den Flansch 21, welcher mit der Ventilnadel 3 verschweißt ist, ebenfalls in Hubrichtung mit. Der mit der Ventilnadel 3 in Wirkverbindung stehende Ventilschließkörper 4 hebt von der Ventilsitzfläche 6 ab. Der Brennstoff wird durch die Abspritzöffnung 7 auf die in dem Aufsatz 36 angeordnete Membran 37 geleitet, welche durch den Brennstoffdruck in Abströmrichtung verformt wird. Dadurch wird der Zapfen 38 ebenfalls in Abströmrichtung bewegt, so daß durch einen dabei entstehenden Ringspalt 39 Brennstoff kegelförmig abgespritzt wird.

Wird der Spulenstrom abgeschaltet, fällt der Anker 20 nach genügendem Abbau des Magnetfeldes durch den Druck der Rückstellfeder 23 vom Innenpol 13 ab, wodurch sich der mit der Ventilnadel 3 in Wirkverbindung stehende Flansch 21 entgegen der Hubrichtung bewegt. Die Ventilnadel 3 wird dadurch in die gleiche Richtung bewegt, wodurch der Ventilschließkörper 4 auf der Ventilsitzfläche 6 aufsetzt und das Brennstoffeinspritzventil 1 geschlossen wird. Dadurch läßt auch der Brennstoffdruck auf die Membran 37 nach, so daß der Zapfen 38 durch die Elastizität der Membran 37 entgegen der Strömungsrichtung des Brennstoffs an den Aufsatz 36 gezogen wird, so daß der Zapfen 38 ebenfalls in dichtender Anlage an dem zweiten Dichtsitz anliegt.

Fig. 2A und 2B zeigen in einer ausschnittsweisen Schnittdarstellung das in Fig. 1 dargestellte erfindungsgemäß ausgestaltete Brennstoffeinspritzventil 1 im Bereich II in Fig. 1 in geschlossenem sowie in geöffnetem Zustand. Übereinstimmende Bauteile sind in allen Zeichnungen mit übereinstimmenden Bezugszeichen versehen.

Bevor anhand der Fig. 2A und 2B die Funktionsweise des erfindungsgemäßen Brennstoffeinspritzventils 1 erläutert wird, wird im folgenden eine Beschreibung der für die Erfindung relevanten Bauteile vorangestellt.

Das Brennstoffeinspritzventil 1 ist, wie bereits weiter oben kurz angedeutet, zweiteilig aufgebaut. Das eigentliche Brennstoffeinspritzventil 1 ist als ein nach innen öffnendes Brennstoffeinspritzventil 1 konzipiert, wobei der Ventilschließkörper 4 mit der Ventilsitzfläche 6 zu einem ersten Dichtsitz zusammenwirkt. Dem ersten Dichtsitz ist ein zweiter Dichtsitz nachgeschaltet, der durch den Aufsatz 36 und den an dem Aufsatz 36 durch die Membran 37 in dichtender Anlage gehaltenen Zapfen 38 gebildet wird. Dieser nachgeschaltete Dichtsitz öffnet nach außen, also in den nicht dargestellten Brennraum der Brennkraftmaschine hinein.

Der nach innen öffnende Teil des Brennstoffeinspritzventils 1 kann ein konventionelles Brennstoffeinspritzventil 1 sein, welches einen Düsenkörper 2 aufweist, der mit dem Ventilsitzkörper 5 vorzugsweise verschweißt ist. Die Ventilnadel 3, die im vorliegenden Ausführungsbeispiel einstückig mit dem Ventilschließkörper 4 ausgebildet ist, wird durch ein Führungselement 34, in dem zumindest ein Brennstoffkanal 30c ausgebildet ist, geführt. Der Ventilschließkörper 4 bildet mit der an dem Ventilsitzkörper 5 ausgebildeten Ventilsitzfläche 6 den ersten Dichtsitz. Abströmseitig des ersten Dichtsitzes ist im Ventilsitzkörper 5 eine Abspritzöffnung 7 ausgebildet, deren Form bedingt durch den nachgeschalteten Aufsatz 36 beliebig ist. Beispielsweise kann die Abspritzöffnung 7 dabei so dimensioniert sein, daß eine gewisse Drosselwirkung eintritt, um den Durchfluß durch das Brennstoffeinspritzventil 1 zu begrenzen.

Am abströmseitigen Ende 35 des Ventilsitzkörpers 5 ist der Aufsatz 36 vorzugsweise durch Schweißen, Löten oder Kleben angebracht. Der Aufsatz 36 weist zulaufseitig eine erste Ausnehmung 40 auf, in der die Membran 37, die vorzugsweise scheibenförmig ausgebildet ist, angeordnet ist. Die Membran 37 kann dabei wiederum je nach Material durch Schweißen, Löten oder Kleben in der ersten Ausnehmung 40 befestigt sein. Die Membran 37 deckt eine zweite Ausnehmung 41 ab, welche abströmseitig in den nicht dargestellten Brennraum der Brennkraftmaschine mündet. Die zweite Ausnehmung 41 wird dabei von dem Zapfen 38 durchgriffen, der kraftschlüssig mit der Membran 37 verbunden ist und an einem abströmseitigen Ende 46 radial kegelförmig erweitert ist. Das kegelförmig erweiterte Ende 46 des Zapfens 38 bildet zusammen mit dem Aufsatz 36 den zweiten Dichtsitz.

Anhand der Fig. 2A und 2B wird nun die Funktionsweise des erfindungsgemäßen Brennstoffeinspritzventils 1 verdeutlicht.

In Fig. 2A ist das Brennstoffeinspritzventil 1 geschlossen. Es strömt kein Brennstoff. Der Ventilschließkörper 4 wird durch die Federkraft der in Fig. 2A nicht dargestellten Rückstellfeder 23 in dichtender Anlage an der Ventilsitzfläche 6 des ersten Dichtsitzes gehalten. Die Membran 37 befindet sich mangels zuströmenden Brennstoffs ebenfalls im Ruhezustand, wodurch der Zapfen 38 in dichtender Anlage an dem Aufsatz 36 gehalten wird.

Wird die aus Fig. 1 bekannte Magnetspule 10 des Brennstoffeinspritzventils 1 bestromt, hebt nach genügendem Aufbau des Magnetfeldes der Anker 20 die Ventilnadel 3 entgegen der Strömungsrichtung des Brennstoffs an. Dadurch hebt, wie in Fig. 2B dargestellt, der Ventilschließkörper 4 vom ersten Dichtsitz ab, und Brennstoff strömt durch die Abspritzöffnung 7 in die erste Ausnehmung 40 des Aufsatzes 36. Mit zunehmendem Brennstoffdruck wird die Membran 37 immer weiter in Abströmrichtung verformt, bis der Druck groß genug ist, daß der Zapfen 38 vom zweiten Dichtsitz an dem Aufsatz 36 abhebt und Brennstoff durch die zumindest eine Durchströmöffnung 42 in der Membran 37 und den zumindest einen Strömungskanal 45, der die erste Ausnehmung 40 mit der zweiten Ausnehmung 41 verbindet, zum zweiten Dichtsitz strömt.

Durch den Brennstoffdruck wird die Membran 37 bis zu einer Anschlagfläche 44 verformt. Der maximalen Verformung der Membran 37 entspricht ein Ringspalt 39, welcher zwischen dem Zapfen 38 und der zweiten Ausnehmung 41 durch die Bewegung des Zapfens 38 entsteht. Durch die Weite des Ringspalts 39 ist die statische Durchflußmenge des Brennstoffs in geöffnetem Zustand des Brennstoffeinspritzventils 1 einstellbar. Durch eine einfache Oberflächenbearbeitung des Zapfens 38 kann die Spraybildung optimiert werden.

Der Neigungswinkel des kegelförmig aufgeweiteten Endes 46 des Zapfens 38 gibt dabei den Strahlöffnungswinkel α der in den Brennraum der Brennkraftmaschine eingespritzten Gemischwolke vor. Der Einspritzwinkel γ kann dabei beliebig durch eine schräge Bauweise des Aufsatzes 36 erzielt werden.

Durch eine tangentiale Komponente des zumindest einen die erste Ausnehmung 40 mit der zweiten Ausnehmung -41 verbindenden Strömungskanals 45 ist zudem auf einfache Weise eine Verdrallung des die Membran 37 durchströmenden Brennstoffs zu erzielen. Die Ausbildung einer Drallströmung in der zweiten Ausnehmung 41 homogenisiert den Brennstoffstrahl und sorgt für eine gleichmäßige, stöchiometrische Gemischwolke im Brennraum.

Wegen des nach außen öffnenden abschließenden Aufsatzes 36 fällt ein Totvolumen völlig weg. Nachfolgende kurzzeitige Öffnungsphasen des nach innen öffnenden Dichtsitzes beispielsweise durch Anker- oder Ventilnadelpreller bleiben in Folge des Aufsatzes 36 ebenso ohne nachteilige Wirkung wie Fertigungsungenauigkeiten. Der Ringspalt 39 ist zudem luftumspült und daher verkokungsoptimal eingebaut.

Die Erfindung ist nicht auf das dargestellte Ausführungsbeispiel beschränkt und z. B. auch für Brennstoffeinspritzventile 1 mit piezoelektrischen oder magnetostriktiven Aktoren 10 geeignet.

### Bezugszeichenliste

- 1: Brennstoffeinspritzventil
- 2: Düsenkörper
- 3: Ventilnadel
- 4: Ventilschließkörper
- 5: Ventilsitzkörper
- 6: Ventilsitzfläche
- 7: Abspritzöffnung
- 8: Dichtung
- 9: Außenpol
- 10: Magnetspule
- 11: Spulengehäuse
- 12: Spulenträger
- 13: Innenpol
- 14: Ventilnadelführung
- 15: Einstellscheibe
- 16: zentrale Brennstoffzufuhr
- 17: Steckkontakt
- 18: Kunststoffummantelung
- 19: elektrische Leitung
- 20: Anker
- 21: Flansch
- 22: Schweißnaht
- 23: Rückstellfeder
- 24: Hülse
- 25: Filterelement
- 26: Drosselspalt
- 27: Arbeitsspalt
- 28: Dichtung
- 29: Verbindungsbauteil
- 30a-30c: Brennstoffkanal
- 31: zweiter Flansch
- 32: Dämpfungselement
- 33: Schweißnaht
- 34: Führungselement
- 35: abströmseitiges Ende des Ventilsitzkörpers 5
- 36: Aufsatz
- 37: Membran
- 38: Zapfen
- 39: Ringspalt
- 40: erste Ausnehmung des Aufsatzes 36
- 41: zweite Ausnehmung des Aufsatzes 36
- 42: Durchströmöffnungen
- 43: Schulter
- 44: Anschlagfläche
- 45: Strömungskanal
- 46: abströmseitiges Ende des Zapfens 38

## Patentansprüche

1. Brennstoffeinspritzventil (1), insbesondere zum direkten Einspritzen von Brennstoff in einen Brennraum einer gemischverdichtenden, fremdgezündeten Brennkraftmaschine, mit einem Aktor (10) und einer durch den Aktor (10) betätigbaren Ventilnadel (3) zur Betätigung eines Ventilschließkörpers (4), der zusammen mit einer an einem Ventilsitzkörper (5) ausgebildeten Ventilsitzfläche (6) einen ersten Dichtsitz bildet, wobei an einem abströmseitigen Ende (35) des Ventilsitzkörpers (5) ein Aufsatz (36) angeordnet ist, der ein in einer ersten Ausnehmung (40) des Aufsatzes (36) angeordnetes elastisches Mittel (37) aufweist, das kraftschlüssig mit einem Zapfen (38) verbunden ist, eine zweite Ausnehmung (41) des Aufsatzes durchgreift, wobei der Zapfen (38) durch den Druck des zuströmenden Brennstoffs in einer Abströmrichtung betätigbar ist,
**dadurch gekennzeichnet, daß** das elastisches Mittel eine Membran (37) ist und
daß der Zapfen (38) mit dem Aufsatz (36) einen zweiten Dichtsitz bildet.

2. Brennstoffeinspritzventil nach Anspruch 1,
**dadurch gekennzeichnet,**
**daß** der Aufsatz (36) mit dem Ventilsitzkörper (5) mittels Schweißen, Löten oder Kleben verbunden ist.

3. Brennstoffeinspritzventil nach Anspruch 1 oder 2,
**dadurch gekennzeichnet,**
**daß** die Membran (37) scheibenförmig ausgebildet ist.

4. Brennstoffeinspritzventil nach einem der Ansprüche 1 bis 3,
**dadurch gekennzeichnet,**
**daß** die Membran (37) zumindest eine Durchströmöffnung (42) aufweist.

5. Brennstoffeinspritzventil nach einem der Ansprüche 1 bis 4,
**dadurch gekennzeichnet,**
**daß** die Membran (37) mit dem Aufsatz (36) verschweißt, verlötet oder verklebt ist.

6. Brennstoffeinspritzventil nach einem der Ansprüche 1 bis 5,
**dadurch gekennzeichnet,**
**daß** die zweite Ausnehmung (41) des Aufsatzes (36) eine Schulter (43) aufweist, welche eine Anschlagfläche (44) für die Membran (37) bildet.

7. Brennstoffeinspritzventil nach Anspruch 6,
**dadurch gekennzeichnet,**
**daß** in der Schulter (43) zumindest ein Strömungskanal (45) ausgebildet ist, der die erste Ausnehmung (40) mit der zweiten Ausnehmung (41) verbindet.

8. Brennstoffeinspritzventil nach Anspruch 7,
**dadurch gekennzeichnet,**
**daß** der zumindest eine Strömungskanal (45) eine tangentiale Komponente aufweist.

9. Brennstoffeinspritzventil nach einem der Ansprüche 1 bis 8,
**dadurch gekennzeichnet,**
**daß** ein abströmseitiges Ende (46) des Zapfens (38) radial kegelförmig verbreitert ist.

10. Brennstoffeinspritzventil nach Anspruch 9,
**dadurch gekennzeichnet,**
**daß** in einem geöffneten Zustand des Brennstoffeinspritzventils (1) zwischen dem Aufsatz (36) und dem kegelförmigen Ende (46) des Zapfens (38) ein Ringspalt (39) ausgebildet ist.

## Claims

1. Fuel injection valve (1), in particular for the direct injection of fuel into a combustion chamber of a mixture-compressing, spark-ignited internal combustion engine, having an actuator (10) and a valve needle (3), which can be actuated by the actuator (10), for actuating a valve-closing body (4) which together with a valve seat surface (6) formed on a valve seat body (5), forms a first sealing seat, an attachment (36) being arranged at an outflow end (35) of the valve seat body (5) and having an elastic means (37), which is arranged in a first recess (40) of the attachment (36) and is connected frictionally to a stud (38) reaching through a second recess (41) of the attachment, it being possible for the stud (38) to be actuated in an outflow direction by the pressure of the inflowing fuel, **characterized in that** the elastic means is a membrane (37) and **in that** the stud (38) forms, together with the attachment (36), a second sealing seat.

2. Fuel injection valve according to Claim 1, **characterized in that** the attachment (36) is connected to the valve seat body (5) by means of welding, soldering or bonding.

3. Fuel injection valve according to Claim 1 or 2, **characterized in that** the membrane (37) is of disc-shaped design.

4. Fuel injection valve according to one of Claims 1 to 3, **characterized in that** the membrane (37) has at least one throughflow opening (42).

5. Fuel injection valve according to one of Claims 1 to 4, **characterized in that** the membrane (37) is welded, soldered or bonded to the attachment (36).

6. Fuel injection valve according to one of Claims 1 to 5, **characterized in that** the second recess (41) of the attachment (36) has a shoulder (43) which forms a stop surface (44) for the membrane (37).

7. Fuel injection valve according to Claim 6, **characterized in that** at least one flow duct (45) is formed in the shoulder (43) and connects the first recess (40) to the second recess (41).

8. Fuel injection valve according to Claim 7, **characterized in that** the at least one flow duct (45) has a tangential component.

9. Fuel injection valve according to one of Claims 1 to 8, **characterized in that** an outflow end (46) of the stud (38) is widened radially in a conical shape.

10. Fuel injection valve according to Claim 9, **characterized in that**, in an open state of the fuel injection valve (1), an annular gap (39) is formed between the attachment (36) and the conical end (46) of the stud (38).

## Revendications

1. Injecteur de carburant (1), en particulier pour l'injection directe de carburant dans la chambre de combustion d'un moteur à combustion interne à compression de mélange et à allumage commandé, comportant un actionneur (10) et une aiguille de soupape (3) pouvant être actionnée par l'actionneur (10) afin d'actionner un corps de fermeture de soupape (4) qui, conjointement avec une surface de siège de soupape (6) constituée sur un corps de siège de soupape (5), forme un premier siège étanche, un chapeau (36) étant disposé sur une extrémité (35), située du côté aval, du corps de siège de soupape (5), lequel chapeau (36) comporte un élément élastique (37) mis en place dans un premier évidement (40) du chapeau (36), et relié de force à un téton (38) qui traverse un second évidement (41) du chapeau, le téton (38) pouvant être actionné dans une direction d'écoulement par la pression du carburant affluant,
**caractérisé en ce que**
l'élément élastique (37) est une membrane, et le téton (38) forme un second siège étanche avec le chapeau (36).

2. Injecteur de carburant selon la revendication 1,
**caractérisé en ce que**
le chapeau (36) est relié au corps de siège de soupape (5) par soudage, brasage ou collage.

3. Injecteur de carburant selon la revendication 1 ou 2,
**caractérisé en ce que**
la membrane (37) est en forme de disque.

4. Injecteur de carburant selon l'une des revendications 1 à 3,
**caractérisé en ce que**
la membrane (37) comporte au moins une ouverture de passage (42).

5. Injecteur de carburant selon l'une des revendications 1 à 4,
**caractérisé en ce que**
la membrane (37) est soudée, brassée ou collée au chapeau (36).

6. Injecteur de carburant selon l'une des revendications 1 à 5,
**caractérisé en ce que**
le second évidement (41) du chapeau (36) comporte un épaulement (43) qui forme une surface de butée (44) pour la membrane (37).

7. Injecteur de carburant selon la revendication 6,
**caractérisé en ce qu'**
à l'intérieur de l'épaulement (43), est constitué au moins un conduit d'écoulement (45) qui relie le premier évidement (40) au second évidement (41).

8. Injecteur de carburant selon la revendication 7,
**caractérisé en ce que**
le conduit d'écoulement (45) présente une composante tangentielle.

9. Injecteur de carburant selon l'une des revendications 1 à 8,
**caractérisé en ce qu'**
une extrémité (46) du téton (38), située du côté aval, est élargie radialement en forme de cône.

10. Injecteur de carburant selon la revendication 9,
**caractérisé en ce que**
dans un état ouvert de l'injecteur de carburant (1), une fente annulaire (39) est constituée entre le chapeau (36) et l'extrémité en forme de cône (46) du téton (38).
